# EUROPEAN PATENT APPLICATION

(11) **EP 4 506 900 A1**
(43) Date of publication of application: **12.02.2025**
(21) Application number: 23306370.0
(22) Date of filing: 11.08.2023
(51) Int. Cl.: G06T 15/04, G06T 19/20, G06T 17/20

(54) **MAPPING OF TEXTURE IN 3D SCENE**

(71) Applicant: Dassault Systèmes, 78140 Vélizy-Villacoublay (FR)
(72) Inventor: PEYTHIEUX, Laura, 13090 Aix-en-Provence (FR); SADOUDI, Yani, 78946 Vélizy-Villacoublay Cedex (FR); LETZELTER, Frédéric, 78946 Vélizy-Villacoublay Cedex (FR)
(74) Representative: Bandpay & Greuter

(57) **Abstract**

The disclosure notably relates to a computer-implemented method for mapping a texture on one or more points in a 3D scene. The one or more points in the 3D scene are obtained from a user-input with an input device. The method comprises determining, from the user-input performed with the input device, the one or more points in the 3D scene to be textured. The method comprises computing a 3D support comprising the determined one or more points to be textured. The method comprises computing a texture based on the determined one or more points. The method comprises rendering the computed texture on the computed 3D support. The method forms an improved solution for rendering a 3D scene.

## Description

### TECHNICAL FIELD

The disclosure relates to the field of computer programs and systems, and more specifically to a method, system and program for mapping a texture on one or more points in a 3D scene.

### BACKGROUND

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Many technological fields implement 3D drawing; these are for example Graphic Creation, CAD or Product Design. In these technological fields, one of the goals is to provide the user with the closest experience to the classical 2D sketching (e.g., using a pen on a paper sheet), but in a virtual 3D space. To that end, one of the functionalities is to allow the user to texture a 3D scene, i.e., to add textures to the 3D scene (or 3D space). To do so, existing solutions usually include a determination of a 3D curve drawn by the user and an addition of this determined 3D curve to the 3D scene. However, these existing solutions for 3D drawing are not sufficient.

In particular, the quality of the rendering of 3D curves in the 3D scene is inferior to that of a 2D drawing and suffers from deficiencies. Notably, the superposition of two or more 3D curves is not equivalent to that for a 2D drawing, especially when the 3D curves have an opacity lower than 100%. Technically, the order used for curves rendering depends on the visualization engine used or even the graphic card's optimizations. In existing solutions, the order of rendering is very impacting on result. Therefore, the quality of the result cannot be ensured with overlapping 3D shapes.

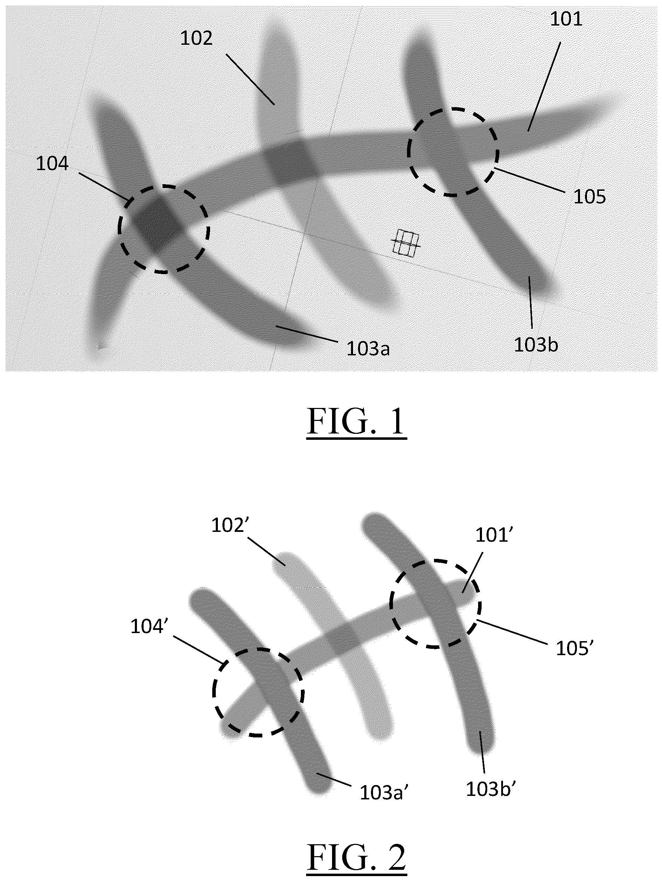

A first example of rendering deficiency is now illustrated on an example with reference to FIGs. 1 and 2, which show the rendering obtained using a 3D drawing solution and a 2D drawing solution respectively.

The FIGs. 1 and 2 show the rendering of four 3D curves 101, 102, 103a and 103b drawn by a user. Curve 102 has been drawn first, and then curve 101 and curves 103a and 103b have been drawn. Thus, curve 101 intersects curve 102, and curves 103a and 103b intersect curve 101 respectively at 104 and 105. The curves 101 and 102 have an opacity of 40% while the curves 103a and 103b have an opacity of 100%. FIG. 1 shows that there is a rendering problem at the intersections 104 and 105 using the 3D drawing solution. Indeed, the rendering in the overlapping area 104 differs from the rendering in the overlapping area 105 whereas the rendering should be identical for these two intersections. This problem occurs because in the overlapping area 104, the curve 101 is rendered above the curve 103a, whereas in the overlapping area 105, the curve 101 is rendered under the curve 103b. Thus, since the curve 101 has an opacity of 40%, the curve 103a is visible under the curve 101 in the overlapping area 104, whereas in the overlapping area 105, since the curve 103b has an opacity of 100%, the curve 101 is not visible under the curve 103b.

The rendering in a 3D scene is therefore deficient as it depends on the order in which the different curves are rendered. Interestingly, this problem does not occur in 2D drawing solutions: indeed, in 2D drawing solutions, all the curves are rendered on a same plane. FIG. 2 shows the rendering of similar curves (101', 102', 103a', 103b', 104', 105' corresponding respectively to 101, 102, 103a, 103b, 104, 105) but using a 2D drawing solution. In the 2D drawing, the intersection areas are identical between area 104' and area 105'. The rendering using a 3D drawing solution as illustrated on FIG. 1 should have been the same as the 2D drawing solution, which is not the case. This is a first example of the lack of rendering quality of existing 3D drawing solutions.

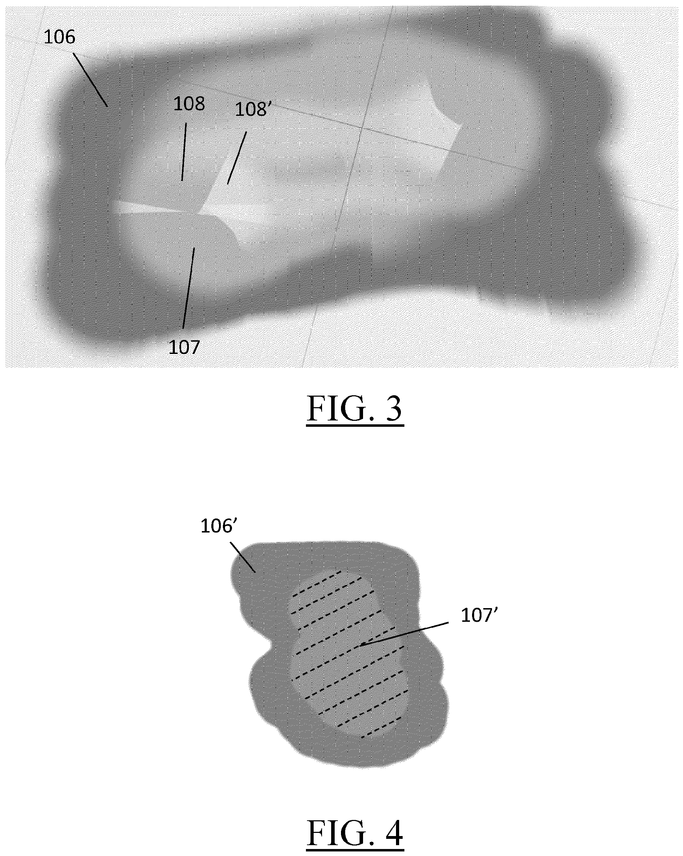

Another example of rendering deficiency in a 3D scene concerns the color blending. This rendering deficiency is now discussed in reference to FIGs. 3 and 4.

FIG. 3 shows the rendering of two curves 106 and 107 that overlap using an existing 3D drawing solution: the curve 106 has been created by performing several back and forth of a graphical tool (e.g., a stylus actuated on a tablet as a haptic device of the computer, an appendage on a touchscreen) thereby obtaining a colored area on the canvas and curve 107 had been obtained performing a similar gesture over the curve 106. The result on FIG. 3 shows that, in the overlapping area, the rendering is not homogeneous and disparities are visible. Thus, the overlapping does not respect the physics. In particular, in the area 108, the texture of the second curve 107 is predominant, while in the area 108', the texture of the first curve 106 is predominant. This is because the curve 107 overlaps itself, so that the texture of the second curve 107 is more and more opaque in the area 108'. However, the rendering at the intersection area should have been homogeneous as illustrated in FIG. 4 that represents the result that would be obtained with a similar overlapping of two curves (i.e., 107' being created over 106', like 107 with 106) in a 2D drawing solution where the overlapping result depends on the brush and the physics of it. In known 3D drawing solutions, the way the colors and curves are mixed cannot be controlled. This illustrates another example of lack of rendering quality of existing 3D drawing solutions.

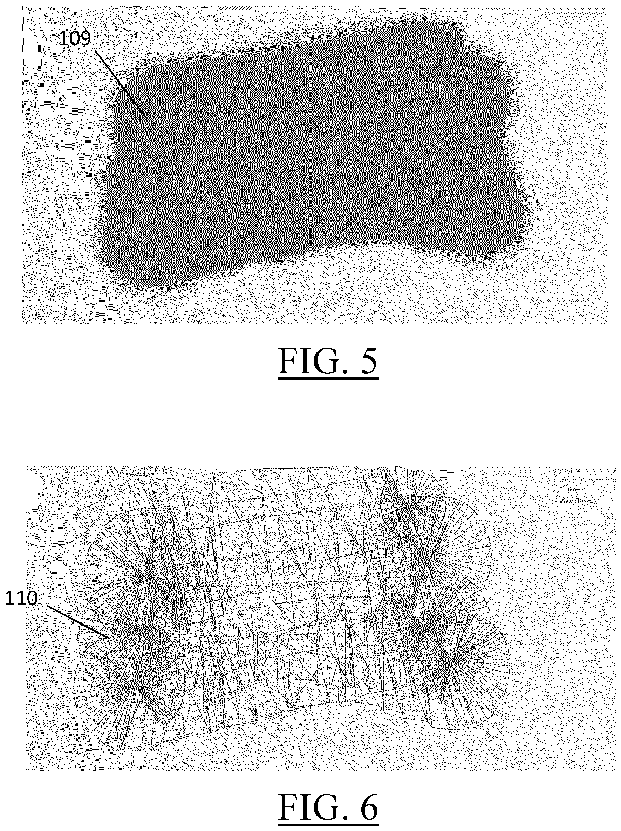

Furthermore, known 3D drawing solutions can be based on 3D ribbons (one for each curve) comprising a mesh of triangles. However, using one 3D ribbon by curve is not optimal for coloring. Indeed, it implies that the number of triangles to make a stain of color is enormous. FIG. 6 shows an example of the enormous number of triangles 110 used for rendering the texture 109 illustrated in FIG. 5. The number of triangles affects the performances of the application (for example the Frame Rate): indeed, the rendering considers each of the triangles, and the computational capabilities needed for performing the rendering are a function of the number of triangles to consider. Moreover, each triangle is stored in memory, and the number of triangles thus also affects the memory size used. Hence, the excessive use computing resources and memory capacity required for rendering in existing 3D drawing solutions is a limitation.

Within this context, there is still a need for an improved solution for rendering a 3D scene comprising overlapping textures.

### SUMMARY

It is therefore provided a computer-implemented method for mapping a texture on one or more points in a 3D scene. The one or more points in the 3D scene are obtained from a user-input with an input device. The method comprises determining, from the user-input performed with the input device, the one or more points in the 3D scene to be textured. The method comprises computing a 3D support comprising the determined one or more points to be textured. The method comprises computing a texture based on the determined one or more points. The method comprises rendering the computed texture on the computed 3D support.

The method may comprise one or more of the following:
- the method may further comprise parametrizing the one or more points to be textured;
- computing the texture may comprise computing the texture based on the parametrized one or more points;
- the 3D scene may comprise a 3D modeled object. The computing of the 3D support may comprise:
   ∘ placing each of the one or more points on the 3D modeled object; and
   ∘ determining a part of the 3D modeled object serving as the 3D support;
- the placing of each of the one or more points on the 3D modeled object may comprise projecting each of the one or more points on the surface of the 3D modeled object;
- the determined part of the 3D modeled object may be a single surface that includes each of the one or more points placed on the 3D modeled object;
- the 3D modeled object may be tessellated with polygons. The determining of the part of the 3D modeled object serving as the 3D support may comprise:
   ∘ identifying the polygons of the 3D modeled object that comprise the placed points;
   ∘ aggregating the identified polygons thereby obtaining the single surface; and
   ∘ computing a copy of the single surface, the copy of the single surface serving as the 3D support;
- the method may further comprise computing a new tessellation of the single surface;
- the computing of the new tessellation may comprise computing the new tessellation of the single surface with a density of tessellation that is substantially the same as a density of tessellation of the 3D modeled object or a density of tessellation of the part of the 3D modeled object;
- the one or more points may be coplanar. The computing of the 3D support may comprise determining a rectangular surface comprising each of the one or more points. The determined rectangular surface may consist in two triangles;
- the method may further comprise displaying the rendered texture on the 3D support;
- the method may further comprise:
   ∘ detecting that the user-input is extended;
   ∘ determining one or more new points from the extended user-input;
   ∘ recomputing the 3D support so that the recomputed 3D support comprises the one or more new points;
   ∘ recomputing the texture so that the recomputed texture comprises the textured one or more new points; and
   ∘ updating the rendering of the recomputed texture on the recomputed 3D support; and/or
- the method may further comprise displaying the rendering of the recomputed texture on the recomputed 3D support.

It is further provided a computer program comprising instructions which, when executed by a computer, cause the computer to perform the method.

It is further provided a computer readable (e.g., non-transitory) storage medium having recorded thereon the computer program.

It is further provided a system comprising a processor coupled to a memory, the memory having recorded thereon the computer program. Optionally, the processor may be coupled to a graphical user interface.

It is further provided a device comprising the computer readable storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIGs. 1 to 6 show limitations of existing 3D drawing solutions;
- FIG.7 shows a flowchart of an example of the method;
- FIG. 8 illustrates an example of implementation of the method;
- FIG. 9 shows a flowchart of an example of the rendering update;
- FIG. 10 illustrates two examples of the rendering update;
- FIG. 11 illustrates an example of the computing S40 of the texture;
- FIGs. 12 to 14 illustrate examples of computed texture and 3D support;
- FIG. 15 shows an example of a graphical user interface of the system; and
- FIG. 16 shows an example of the system.

### DETAILED DESCRIPTION

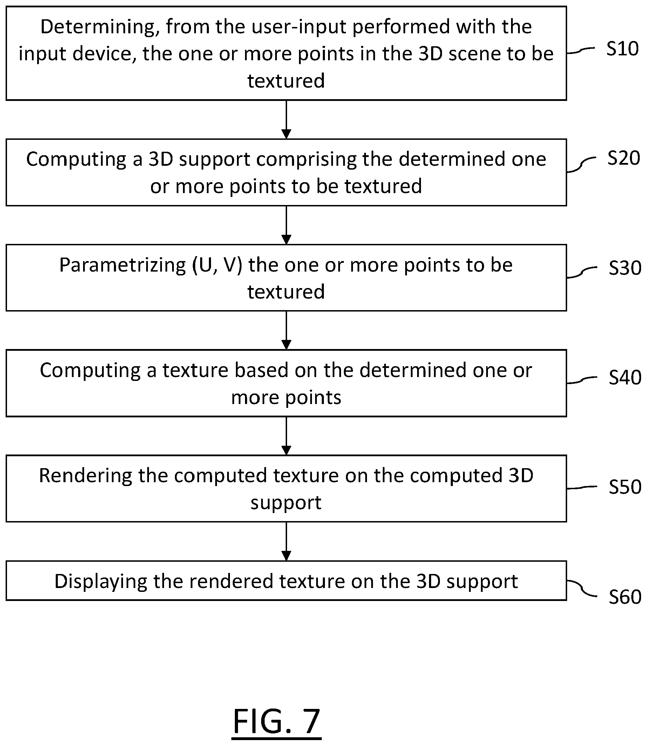

With reference to the flowchart of FIG. 7, it is proposed a computer-implemented method for mapping a texture on one or more points in a 3D scene. The one or more points in the 3D scene are obtained from a user-input with an input device. The method comprises determining S10, from the user-input performed with the input device, the one or more points in the 3D scene to be textured. The method comprises computing S20 a 3D support comprising the determined one or more points to be textured. The method comprises computing S40 a texture based on the determined one or more points. The method comprises rendering S50 the computed texture on the computed 3D support.

Such a method forms an improved solution for rendering a 3D scene.

The method solves the above-mentioned limitations of existing solutions of 3D drawing. Notably, this is made possible as the rendering of the computed texture is performed on the computed support.

Firstly, the quality of rendering of the 3D scene is equivalent to that of a 2D scene. Indeed, the texture is 2D by definition, and the method therefore calculates the third texture as in a 2D drawing solution. The method allows rendering the computed texture in a 3D scene, and thus to have as much detail as in a 2D drawing. This is made possible by the 3D support computed in the 3D scene which allows the rendering of the texture in the 3D scene. The method allows blending the color correctly.

Secondly, the computing of the texture being performed independently from the 3D support, a non-homogeneous rendering and visible disparities are avoided. Indeed, the texture is 2D by definition and is mapped in the 3D scene, which reduces complexity of the computing of the texture. In particular, it makes it possible to compute the overlapping areas so that the computed result is in accordance with the physics and the real world. For example, a homogeneous texture is obtained despite intersections between several curves. The method therefore provides a way to customize the blending of colors at overlapping.

Thirdly, the method reduces the computing and memory capacities required for the rendering. Indeed, the method is for mapping the texture on the one or more points in a 3D scene, and this mapping is less expensive in term of computing resources than when color is added directly in the 3D scene. The method therefore reduces computing resources consumption. In addition, the method allows optimizing the 3D support (e.g., the number of triangles it includes) according to the shape of the drawing. Moreover, the method is stable because the rendering is independent from the implementations of the rendering engine or the graphic card used. In particular, the rendering of the texture is independent of the rendering order. Regarding the memory space, the method comprises a computing of the 3D support which allows preventing the number of triangles from becoming too large as in existing 3D drawing solutions. A reduced number of triangles is used compared to existing solutions. Therefore, the method reduces the memory space used.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a (e.g., non-transitory) memory and a graphical user interface (GUI), the memory having recorded thereon a computer program comprising instructions for performing the method. The memory is any hardware adapted for such storage, possibly comprising several physical distinct parts (e.g., one for the program, and possibly one for the database). The system may further comprise a graphic card. The graphic card may perform the rendering of the computed texture on the computed 3D support and/or the updating of the rendering of the recomputed first texture on the recomputed first 3D support.

The 3D scene may comprise modeled objects. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD and PLM system, as will be apparent from the definitions of such systems provided below.

By CAD system, it is additionally meant any system adapted at least for designing a modeled object on the basis of a graphical representation of the modeled object, such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g., representing a product such as a part or an assembly of parts, or possibly an assembly of products. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object may represent the geometry of a product to be manufactured in the real world subsequent to the completion of its virtual design with for instance a CAD software solution or CAD system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g., car and light truck equipment, racing cars, motorcycles, truck and motor equipment, trucks and buses, trains), a part of an aerial vehicle (including e.g., airframe equipment, aerospace equipment, propulsion equipment, defense products, airline equipment, space equipment), a part of a naval vehicle (including e.g., navy equipment, commercial ships, offshore equipment, yachts and workboats, marine equipment), a general mechanical part (including e.g., industrial manufacturing machinery, heavy mobile machinery or equipment, installed equipment, industrial equipment product, fabricated metal product, tire manufacturing product), an electro-mechanical or electronic part (including e.g., consumer electronics, security and/or control and/or instrumentation products, computing and communication equipment, semiconductors, medical devices and equipment), a consumer good (including e.g., furniture, home and garden products, leisure goods, fashion products, hard goods retailers' products, soft goods retailers' products), a packaging (including e.g., food and beverage and tobacco, beauty and personal care, household product packaging).

A CAD system may be history-based. In this case, a modeled object is further defined by data comprising a history of geometrical features. A modeled object may indeed be designed by a physical person (i.e., the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history-based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g., a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAM solution, it is additionally meant any solution, software of hardware, adapted for managing the manufacturing data of a product. The manufacturing data generally includes data related to the product to manufacture, the manufacturing process and the required resources. A CAM solution is used to plan and optimize the whole manufacturing process of a product. For instance, it can provide the CAM users with information on the feasibility, the duration of a manufacturing process or the number of resources, such as specific robots, that may be used at a specific step of the manufacturing process; and thus, allowing decision on management or required investment. CAM is a subsequent process after a CAD process and potential CAE process. Such CAM solutions are provided by Dassault Systèmes under the trademark DELMIA^{®}.

By CAE solution, it is additionally meant any solution, software of hardware, adapted for the analysis of the physical behavior of a modeled object. A well-known and widely used CAE technique is the Finite Element Method (FEM) which typically involves a division of a modeled object into elements which physical behaviors can be computed and simulated through equations. Such CAE solutions are provided by Dassault Systèmes under the trademark SIMULIA^{®}. Another growing CAE technique involves the modeling and analysis of complex systems composed of a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA^{®}.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA^{®}.

The method may be included in a 3D drawing solution which may be used (e.g., by a user) for performing graphic creations. Performing graphic creations may consist in creating, choosing and/or using graphic elements (e.g., drawings, typefaces, photos or colors) in order to create a 3D object.

Alternatively, or additionally, the 3D drawing solution may be a CAD or product design solution which can be used for designing a 3D modeled object. "Designing a 3D modeled object" designates any action or series of actions which is at least part of a process of elaborating a 3D modeled object. The 3D modeled object may be the 3D modeled object on which the points are placed. The computed 3D support may thus be a copy of a portion of the 3D modeled object. The method may render the texture on the surface of the 3D modeled object. The method may comprise, prior to the steps S10-S50, the creating of the 3D modeled object. The 3D modeled object may be created from scratch. Alternatively, the method may comprise providing a 3D modeled object previously created, and then modifying the 3D modeled object (e.g., adding textures). The method may be used for rendering the object as it will be after its manufacture.

The method may be included in a manufacturing process, which may comprise, after performing the method, producing a physical product corresponding to the modeled object. In any case, the modeled object designed by the method may represent a manufacturing object. The modeled object may thus be a modeled solid (i.e., a modeled object that represents a solid). The manufacturing object may be a product, such as a part, or an assembly of parts. Because the method improves the design of the modeled object, the method also improves the manufacturing of a product and thus increases productivity of the manufacturing process.

The method is for mapping a texture on one or more points in a 3D scene. In particular, the method allows the user to map the texture by performing a user-input. The mapping may consist in applying the texture on the one or more points, i.e., rendering the texture at the location of the 3D support in the 3D scene. The texture is mapped on the 3D scene according to the user's wishes. Indeed, the 3D support and the texture are determined based on the one of more points determined from the user-input. The resulting texture therefore corresponds to the one the user wishes to obtain.

The determining S10 of the one or more points is now discussed in more details.

The method determines S10 the one or more points from the user-input. The determining S10 may comprise detecting the user-input, for example performed with an input device (e.g., a mouse, a trackball, a stylet, a tablet, a touch-sensitive screen or touchscreen...) or using a Virtual Reality (VR) system. The user-input may be a gesture performed by the user (e.g., with the hand). The gesture defines a trajectory (e.g., from a starting point to an end point) in the real-world. The determining S10 may comprise detecting the trajectory of the gesture performed with the input device. The input device may capture the trajectory defined by the gesture. For example, the input device may be a mouse and the trajectory may be the trajectory followed by the mouse (e.g., on a table) during the gesture. Alternatively, the input device may be a touch-sensitive device (such as a tablet or a smartphone). In that case, the gesture may be performed with a finger or a stylus. The trajectory may correspond to the trajectory followed by the finger or the stylus on the touch-sensitive device during the gesture. Alternatively, the gesture may be performed using the a VR system. The VR system may be configured to capture the trajectory defined by the gesture of the user in the real-world, as known in the art.

The determining S10 may comprise converting the real-world captured trajectory into a trajectory within the 3D scene. For example, the converting may comprise projecting the captured trajectory within the 3D scene (e.g., along the surface of a 3D modeled object within the 3D scene). The projecting may comprise applying a scale factor for taking into account of the difference of scale between the 3D scene and the environment (the real world) in which the gesture is performed (e.g., depending on the scale with which the 3D scene is displayed). In examples, the trajectory may have been performed along a plane (e.g., the table or the surface of the touch device) and may be a 2D trajectory. The conversion may thus comprise a projection of this 2D trajectory into the 3D scene, i.e., in a direction towards the 3D scene. For example, the direction may be a direction perpendicular to a screen on which the 3D scene is displayed (e.g., a screen of the touch-sensitive device).

Alternatively, the captured trajectory may be in 3D (e.g., in the case of the VR system) and the trajectory in the 3D scene may therefore correspond to the captured one. For example, the trajectory in the 3D scene may be equal to the captured one after multiplying by a scale factor to account for a difference in scale. Alternatively or additionally, it may also be offset from the captured one, for example to simulate the effect of a brush. In these examples, the conversion may also comprise a projection but from near to near (i.e., the conversion may comprise a projection of each point onto the nearest point on the surface).

After the conversion, the determining S10 may comprise sampling one or more points along the converted trajectory. These one or more points are in the 3D scene and are the one or more points to be textured. The converted trajectory may pass through each point. The one or more points may be regularly placed along the converted trajectory. For example, the one or more points may be sampled regularly in space along the converted trajectory. In that case, the points may be regularly spaced from each other by a same distance. Alternatively, the one or more points may be regularly sampled in time. In that case, the points may be regularly spaced from each other by a same time elapsed during the gesture. For example, the method may place a point every *X* milliseconds elapsed during the gesture. *X* may, e.g., depend on the processor and/or graphics card of the computer on which the process is run. It may also vary depending on what the computer is doing in parallel (e.g., may depend on available RAM). In that case, the captured trajectory may include a time variable representing when each point of the trajectory is realized. The sampling of the one or more points may be according to this time variable.

The 3D support is now discussed. The following disclosures apply to any 3D support, which means that they apply to the computed 3D support, or for 3D supports in general (e.g., 3D supports that would already be present in the 3D scene at the time the method is executed). A 3D support is a 3D modeled object (or a part of it). For example, the 3D support may be a copy of a part of a 3D modeled object (e.g., representing an object in the represented scene). The 3D support may be a (e.g., single) surface in the 3D scene. The 3D support may comprise a tessellation of this surface (e.g., with polygons such as triangles).

The computing S20 of the 3D support is now discussed in more details. The computed 3D support represents a surface in the 3D scene on which the computed texture is rendered. The computing S20 of the 3D support may thus be according to the 3D scene. For example, the computing S20 may depend on whether or not the 3D scene comprises a 3D modeled object on which the texture may be applied. Additionally, when the 3D scene comprises a 3D modeled object, the computing S20 may depend on whether or not the user-input is performed on this 3D modeled object (i.e., if the projection of the captured trajectory is on the surface of the 3D modeled object). In first examples, the user-input is performed on a 3D modeled object of the 3D scene. In that case, the computed 3D support may correspond to a portion of the 3D modeled object. In second examples, the user-input may not be performed on a 3D modeled object. For example, the 3D scene may not comprise any 3D modeled object or, alternatively, the user-input may not be performed on a 3D modeled object. In that case, the computing S20 of the 3D support may not consider any 3D modeled object. These first and second examples are discussed in more detail in the following paragraphs.

In the first examples, the computing of the 3D support may comprise placing each of the one or more points on the 3D modeled object. The placing may comprise assigning to each of the one or more points a position within the 3D scene that is on the surface of the 3D modeled object. This means assigning to each point the coordinates of a point on the surface of the 3D modeled object. After the placing, the computing of the 3D support may comprise determining a part of the 3D modeled object serving as the 3D support. It means that the 3D support may be a copy of this determined part. The method may comprise copying the determined part, the 3D support being the copy of the determined part.

In examples of the first examples, the placing of the one or more points may comprise projecting each of the points on the (e.g., external) surface (or envelop) of the 3D modeled object. For example, the projecting may be from near to near. For example, the method may project each point on the point of the surface that is closest to the point to be placed. Alternatively, the projecting may be along a direction (e.g., perpendicular to a screen on which the 3D scene is displayed as discussed above). In examples, the one or more points may consist in several points, and at least one point may already have a position on the surface of the 3D modeled object. In that case, the placing of the points may comprise projecting each of the points which has not already a position on the surface of the 3D modeled object.

In examples of the first examples, the determined part of the 3D modeled object is a single surface that includes each of the one or more points placed on the 3D modeled object. It means that the surface may be in one piece. The surface may not include any gap (or void). The single surface may also be a minimal surface including all the points. It means that the single surface may be optimal that contains all the points and with respect to one or more criteria of dimension and shape. For example, the one or more criteria may include a dimensional criterion considering the size of the surface area and/or a criterion representing the complexity of the surface (e.g., of its boundary). In examples, the single surface may include each point with a tolerance. For example, each point may be more than a minimum distance from the surface boundary. The minimum distance may be a model tolerance (e.g., 0.1 millimeter) or a pixel distance (e.g., 2 pixels).

In examples of the first examples, the 3D modeled object may be tessellated with polygons. For example, the 3D modeled object may be tessellated with quadrilaterals or triangles. In that case, the determining of the part of the 3D modeled object serving as the 3D support may comprise identifying the polygons of the 3D modeled object that comprise the placed points. The identifying may comprise determining, for each placed point, on which polygon of the 3D modeled object the point is placed. For example, the identifying may be based on a contact between the point and the polygon or, alternatively, may consider the distance between the point and the polygon (e.g., a center of gravity of the polygon). The identifying may also be performed during the projection previously discussed. In that case, the polygon may be the polygon on which the point is projected.

After the identifying of the polygons, the determining of the part may comprise aggregating the identified polygons thereby obtaining the single surface. The aggregating may comprise forming a new tessellation with the identified polygons. The new tessellation may include all the identified polygons. The forming may include joining the identified polygons that are adjacent. The new tessellation may also include one or more other polygons. The one or more other polygons may join the identified polygons. The forming may include generating such one or more other polygons at locations where the identified polygons that are joined include discontinuities/holes. The surface covered by the new tessellation may have the same properties as the single surface mentioned above (i.e., one piece, not including gap, minimal and optimal surface according to the same criteria).

After the aggregating, the determining of the part may comprise computing a copy of the single surface. The copy of the single surface may serve as the 3D support. For example, this copy of the single surface may be recorded on a memory and may be retrieved by the method during the rendering.

In examples of the first examples, instead of considering the polygons of the 3D modeled object as discussed above, the method may compute the 3D support directly from the determined part. In that case, the method may further comprise computing a new tessellation of the single surface. The tessellation of the single surface may be performed as known in the art. The tessellation may comprise cutting the single surface into basic regular elements (e.g., polygons). In that case, the computed tessellation may inherit one or more properties of the tessellation of the 3D modeled object. For example, the computed tessellation has a density of tessellation that is substantially the same as a density of tessellation of the 3D modeled object (or of a part of the 3D modeled object).

In the examples of the first examples discussed in the previous paragraph, the computing of the new tessellation may comprise computing the new tessellation of the single surface with a density of tessellation that is substantially the same as a density of tessellation of the 3D modeled object or a density of tessellation of the part of the 3D modeled object. For example, the computing may comprise determining the density of tessellation of the 3D modeled object (or of the part of the 3D modeled object), and computing the new tessellation by applying a density criterion aiming at a density approximately equal to the one determined (the determining of a tessellation by applying a density criterion being known in the art).

In the second examples discussed above (i.e., when the user-input is not performed on a 3D modeled object), the computing S20 may comprise generating the 3D support without considering any 3D modeled object. In examples in that case, the one or more points may be coplanar. For instance, during the determining S10, the one or more points may be projected on a plane. This plane may be a background plane of the 3D scene or may be parallel to a screen on which the 3D scene is displayed. The computing of the 3D support may comprise determining a rectangular surface comprising each of the one or more points. The rectangular surface may have the same properties as the single surface mentioned above (i.e., one piece, not including gap, minimal and optimal surface according to the same criteria). The determined rectangular surface may consist in two triangles.

The computing S40 of the texture is now discussed in more details.

The texture is a two-dimensional image that is applied to a three-dimensional surface (e.g., the background image) or a volume (e.g., delimited by a 3D modeled object) in the 3D scene in order to dress this surface or volume. The texture may comprise an array of texels representing the texture space. A texel, also referred to as texture element or texture pixel, is the fundamental unit of a texture map as known in the art. Texels can be described by image regions that are obtained through simple procedures such as thresholding.

The computing S40 of the texture is performed based on the determined one or more points. The texture is 2D and the one or more points are within the 3D scene. Prior to the computing S40, the method may thus further comprise parametrizing S30 the one or more points to be textured. For example, the method may perform the parametrizing S30 after the determining S10 of the one or more points or after the computing S20 of the 3D support. The parametrizing S30 may comprise assigning coordinates in a 2D space (U, V) to each of the one or more points. The parametrizing S30 may comprise a conversion of the one or more points into the 2D space (e.g., to preserve the distances between them, as is known in the art). The computing S40 of the texture is based on the parametrized one or more points. The computing S40 of the texture may be executed based on these one or more points as known in the art. For example, each point may be associated with an elemental pattern, and the calculation may include determining a texture in which the elemental pattern is present at each point.

The rendering of a texture on a 3D support is now discussed. The following disclosures apply to any rendering of a texture on a 3D support, and therefore to the rendering S50 of the computed texture on the computed 3D support. In other words, the following disclosures apply to any rendering of a texture on a 3D support.

A rendering may be performed by a graphic card; more specifically by a GPU of the graphic card. The result of the rendering may comprise data for the display of the 3D scene (i.e., including the texture projected on the 3D support). The rendering may comprise processing the display of the 3D scene including the computed texture. The texture can be displayed at the location of the 3D support (i.e., on the 3D support) ; The 3D support(s) may be visible or not, e.g., the texture(s) is(are) displayed and the 3D support is invisible. The rendered texture on the 3D support may comprise one or more rough curves (one for each user-input) each representing the result of one user-input. A rough curve is the texture resulting from an application of a reference texture (e.g., a color and/or a pattern) to an area centered on the path defined by the user-input and having a predetermined thickness (e.g., a line thickness). The rendering may comprise preparing the display of the rough curve(s) together with the texture(s) of the 3D modeled object(s) present in the 3D scene at the time of the rendering.

The displaying of a rendered texture is now discussed. The following disclosures apply to any display and thus may apply to the rendering S50. The display of a rendered texture is performed after the rendering of the texture. The displaying may comprise displaying the 3D scene to a user (e.g., on a screen). The displaying may be based on the result of the rendering, and may be performed as known in the art. The result of the rendering comprise data allowing the display of the 3D scene (and which are prepared by the graphic card during the rendering). The displaying may comprise executing these data so as to display the 3D scene to the user.

In examples, the method may be performed dynamically, i.e., in real-time. For example, the rendering may be updated when the user-input is extended (e.g., if the user continues the movement of the mouse or the touch on the touch-sensitive device), thereby defining new point(s). The user-input is extended means that the user-input is maintained and the user-input continues (i.e., the user continues the gesture and the trajectory is thus prolonged). In that case, the method may comprise determining the new point(s) based on the prolongated trajectory and repeating the computing of the 3D support and of the texture. For example, the method may repeat the computing of the 3D support and of the texture for each new point determined, or after each time a given number *X* of new points are detected, *X* being an integer for example greater than 1 and/or less than 5. Alternatively, instead of repeating the computing of the support when the trajectory is prolonged, the method may repeat regularly in time these steps, e.g., after each time a duration *T* has elapsed, *T* being a duration for example greater than 1 millisecond and/or less than 100 milliseconds. In that case, when one or more new points are determined for a repetition, the computed support may include these one or more new points. Otherwise, the computed support may be the same as in the previous repetition.

In examples, the method may further comprise detecting that the user-input is extended. The method may comprise determining one or more new points from the extended user-input. The determining of the one or more new points may be performed as discussed above for the one or more (initial) points, but by considering only the new part of the gesture performed by the user. Then, the method may comprise recomputing the 3D support so that the recomputed 3D support comprises the one or more new points. The recomputing of the 3D support may comprise extending the 3D support already computed to include the one or more new points (e.g., using the same criterion discussed previously). Alternatively, the recomputing of the 3D support may comprise computing a new 3D support with all the points (i.e., the points and the new points altogether). The computing of this new 3D support may be equivalent to the computing of the 3D support previously discussed. The method may also comprise recomputing the texture so that the recomputed texture comprises the textured one or more new points. The recomputing of the texture may comprise an update of the texture, which means that only new data regarding the one or more new points may be computed. Then, the method may comprise updating the rendering of the recomputed first texture on the recomputed first 3D support. The rendering the of the recomputed texture on the recomputed 3D support may be performed as the previously discussed rendering.

After the update of the rendering, in examples, the method may further comprise displaying the rendering of the recomputed first texture on the recomputed first 3D support. As for the previously discussed rendering, the 3D scene may be displayed to the user (e.g., on a screen) and based on the result of the update of the rendering (as known in the art).

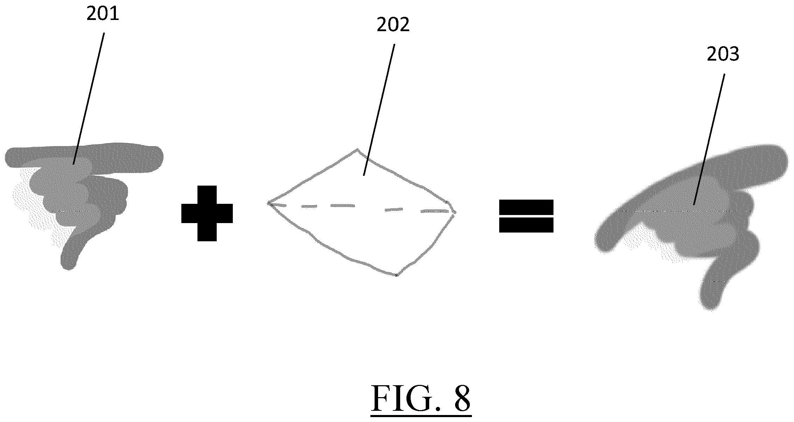

With reference to FIGs. 8 to 16, examples of implementation of the method are now discussed.

FIG. 8 illustrates an example of implementation of the method. The method allows rendering rough curves in 3D sketching applications. The method comprises the computing S20 of the 3D support 202 comprising the determined one or more points to be textured. The computing S20 comprises a generation of an optimal (e.g., virtual) 3D support to display the drawing in the 3D scene. The method comprises the computing S40 of the texture 201 based on the determined one or more points. The method comprises the texturing of said support to display the real drawing intention. The method comprises the rendering S50 the computed texture on the computed 3D support 203. The method may render the texture on the 3D Support using a Shader (UV Mapping). This allows us to control the brush, color blending and every effect of the drawing before or even after the user draws its curves. The method comprises the management of overlapping drawing enriching existing supports or creating new ones.

The method executes an algorithm which allows to optimize the creation of new supports and to handle color blending in real time: when a new curve intersects an existing one, the support of the previous one may be extended to cover the last. The texture of the support is also enriched to add the new colors the user is making. The method answers to all the limitations of existing solution listed previously. In particular, the method improves the rendering of overlapping of 3D curves. Another improvement is that the method provides the same possibilities than a 2D Drawing Software. Indeed, the color blending is computed by rendering a 2D texture on a 3D model and by so offers the same possibilities than 2D Drawing Software solutions. Additionally, the method also decreases dramatically the number of triangles to be used. The method therefore saves memory space.

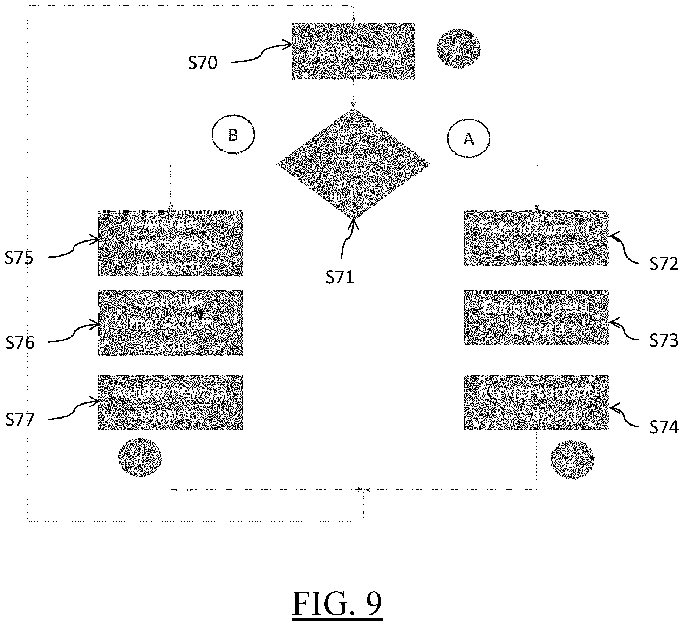

FIG. 9 shows a flowchart of an example of the rendering update. The figure shows the workflow that may be followed by the method to build new rough curves and the principle of enriching supports and textures when necessary. In this example, the user-input is extended, and the method computes a new 3D support accordingly. The method comprises detecting S70 that the user-input is extended. In this example, the subsequent steps depend on the result of the test of step S71. At step S71, the method determines whether at the current mouse position (i.e., the position of the cursor on the screen) there is another 3D support, i.e., another support than the 3D support previously computed for the currently considered user-input. When the method determines that there is not another 3D support at the current mouse position (first situation), the method performs the steps S72, S73 and S74. Otherwise (second situation), the method performs the steps S75, S76 and 577. The method may repeat these steps. For example, the method may repeat these steps for each new point determined, or after each time a given number *X* of new points are detected. Alternatively, the method may repeat regularly in time these steps, e.g., after each time a duration *T* has elapsed.

In the first situation, the method comprises extending S72 the 3D support. The extending S72 comprises the determining of the one or more new points from the extended user-input and the recomputing of the 3D support so that the recomputed 3D support comprises the one or more new points. The method also comprises the recomputing S73 of the texture so that the recomputed texture comprises the textured one or more new points. The recomputing S73 comprises enriching the current texture (i.e., computed previously by the method before the extending S72) so as to include the one or more new points. Then, the method comprises the updating S74 of the rendering of the recomputed texture (i.e., enriched with each new point) on the recomputed 3D support.

In the second situation, there is another 3D support at the current mouse position. This another 3D support may have been computed (e.g., using the method and based on a previously performed user-input). This another 3D support is referred to as first 3D support, and the texture rendered on this first 3D support as first texture. The 3D support currently being extended is referred to as second 3D support, and the texture rendered on this second 3D support as second texture. At step S71, the method therefore detects that the second support intersects with the first support. Then, the method comprises computing S75 a third 3D support by merging the first 3D support and the second 3D support. The method also comprises computing S76 a third texture by mixing the first texture and the second texture. The method comprises rendering S77 the computed third texture on the computed third 3D support.

In examples, the first texture and the second texture may each have a respective color. In that case, the mixing of the second texture with the first texture may comprise blending the color of the first texture with the color of the second texture in an intersection of the second texture and the first texture. The blending of the color of the first texture with the color of the second texture may comprise determining a color that matches the color that would be obtained if the two colors were mixed (e.g., mixed by brush in the real world).

Alternatively, the mixing of the second texture with the first texture may comprise overlapping the first texture by the second texture in the intersection. In that case, the overlapping may comprise determining a texture that would correspond to the one that would be obtained if the two textures were superimposed. For example, the second texture has a transparency. In that case, the overlapping of the first texture by the second texture being according to the transparency of the second texture. The transparency may be comprised between 0 and 100 %. A transparency of 0 % may represent a complete transparency (that of a window without defect nor color for example). In this case, the texture of the intersection may be that of the first texture. A transparency of 100% may represent a complete opacity. In this case, the texture of the intersection may be that of the second texture. When the transparency is between these two extremes, the texture of the intersection may vary proportionally between these two extremes situations (i.e., between the first texture and the second texture).

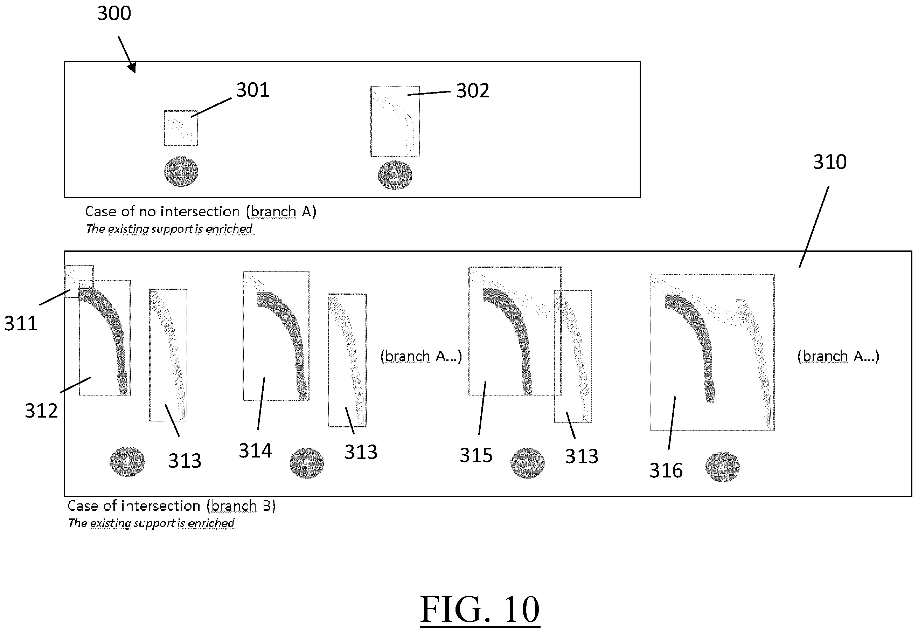

FIG. 10 illustrates two examples of the rendering update.

The first example 300 illustrates the steps S72, S73 and S74 of the so-called first situation of the method described in reference to FIG. 9. The method comprises the extending of the 3D support 301 to become the 3D support 302. During the extending, the method detects that the extension of the 3D support does not intersect with another 3D support. The method therefore perform as previously discussed and recomputes the 3D support and the texture, and updates the rendering.

The second example 310 illustrates the steps S75, S76 and S77 of the so-called second situation of the method described in reference to FIG. 9. In this example, the 3D scene comprises, in addition to the 3D support 311 which is extended, the 3D supports 312 and 313. The method detects that the extended 3D support 311 intersects with the 3D support 312. The method therefore comprises computing a new 3D support 314 by merging the 3D support 311 and the 3D support 312. The method also comprises computing a new texture by mixing the texture rendered on the 3D support 311 and the texture rendered on the 3D support 312. After that, the user-input is extended again, and the method therefore repeats these steps. Again, the method detects that the extended 3D support 315 intersects with the 3D support 313. The method therefore comprises computing a new 3D support 316 by merging the 3D support 315 and the 3D support 313. The method also comprises computing a new texture by mixing the texture rendered on the 3D support 315 and the texture rendered on the 3D support 313.

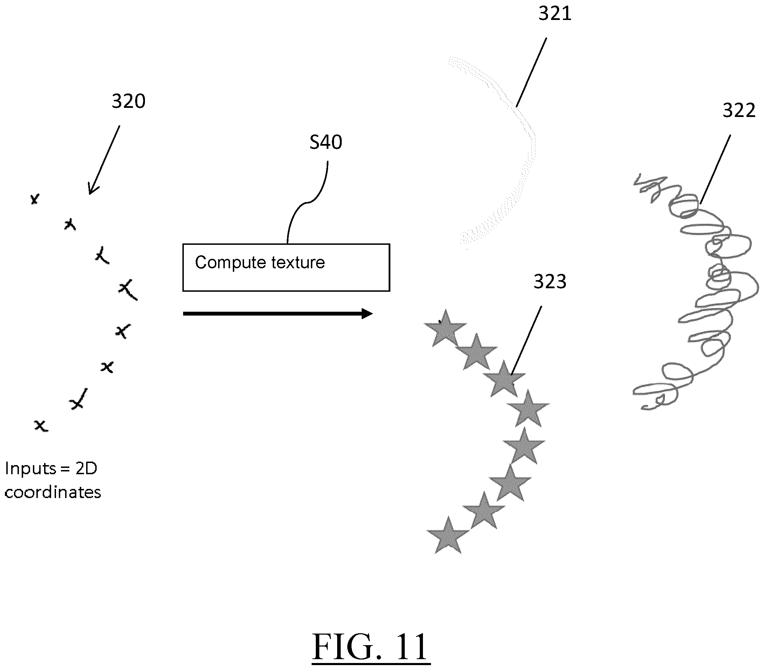

FIG. 11 illustrates an example of the computing S40 of the texture. The method comprises the parametrizing S30 the one or more points to be textured. The parametrizing S30 may comprise projecting the 3D coordinates of the points in a 2D space representing the texture (e.g., using a known projection algorithm). The method may store the 2D coordinates of each point as UV coordinates 320 on the texture. Then, the method may comprise the computing S40 of the texture based on the parametrized points 320 (i.e., on the UV coordinates of these points). For example, the computing S40 may comprise processing parameters like thickness, brush shape, pressure to compute the resulting texture. The figure illustrates different resulting textures (321, 322, 323) obtained for the same parametrized points 320 and using different values of parameters.

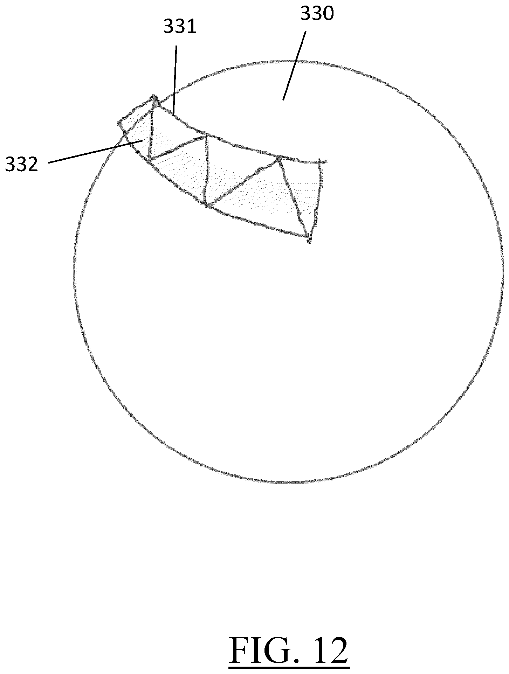

FIGs. 12 to 14 illustrates examples of use of the computed texture and the 3D support. As already discussed, the 3Dsupport support may be invisible when displayed and, in that case, the 3D support is a 3D shape compatible with the other commands of the application. For example, the 3D support can be deformed and/or can be made more complex if desired. The method may comprise deforming the 3D support according to the user's intent (e.g., when the user-input is extended). The method may adapt the texture according to the deformation of the 3D support. As illustrated in these examples, the 3D support may be a portion of a sphere or a plane.

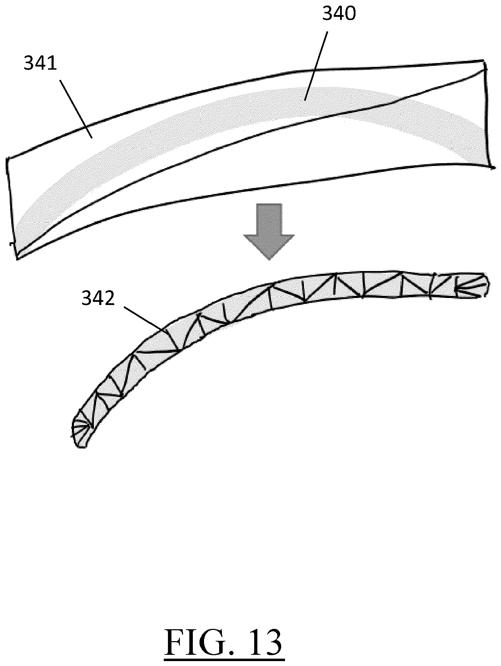

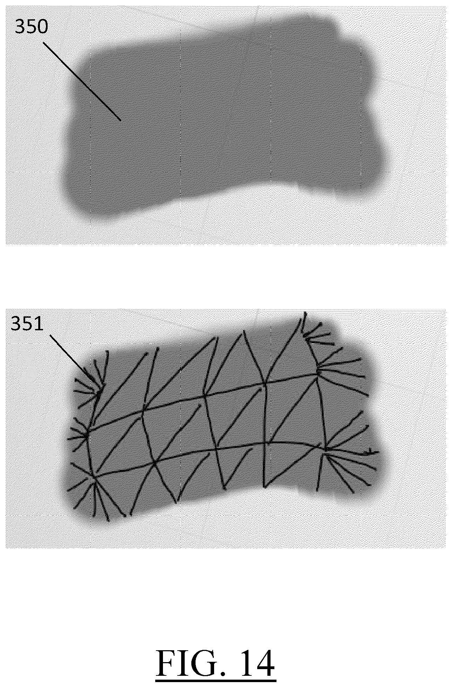

FIG. 12 illustrates the rendering of the texture 332 on a 3D support 331. In this first example, the method has computed the 3D support 331 based on a 3D modeled object 330 present in the 3D scene (a sphere 330 in this example). The method may comprise computing a tessellation (i.e., the triangles) for the 3D support 331. In the examples of FIGs. 13 and 14, the method may compute the 3D support based on a 3D modeled object or without considering a 3D modeled object (by projecting the points on a background image for example). In particular, FIG. 13 illustrates two examples (341, 342) of 3D support computed by the method for the rendering of the texture 340. The type of 3D support may be user selected. For example, the method may comprise providing to the user a way to create the closest shape from its drawing, and may comprise creating the 3D support 342 for the texture 340 and using this newly created 3D support 342 instead of the 3D support 341 for the rendering. The method may comprise forming a single surface including each of the one or more determined points (e.g., based on a touring shape of the drawing formed by the points and texture). Then, the method may comprise computing a tessellation of this single surface, thereby obtaining the 3D support 342. FIG. 14 illustrates another example of 3D support 351 for rendering the texture 350 computed based on a new tessellation. The method comprises computing a single surface based on a contouring shape of the drawing (i.e., including the texture). Then, the method may comprise computing a new tessellation of this single surface so as to optimize at best the number of triangles. The 3D support 351 is an example of tessellation that the method may extract from the drawing's contour.

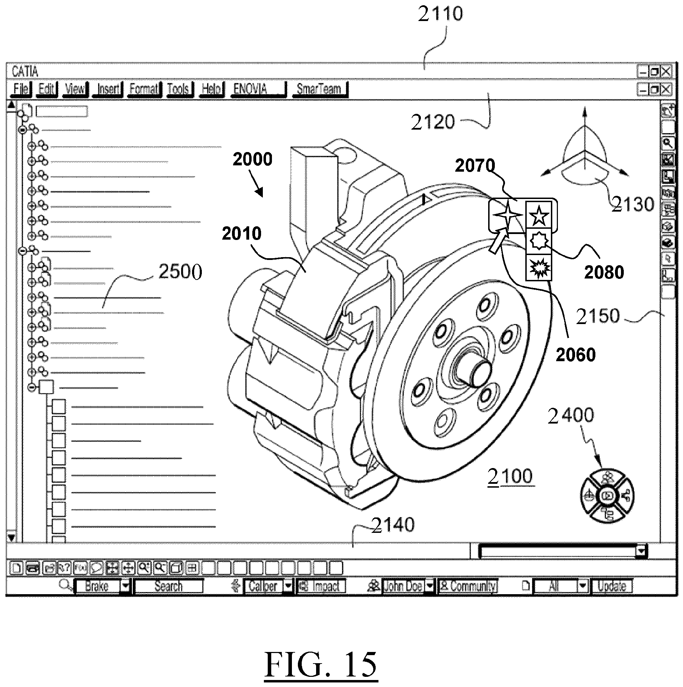

FIG. 15 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

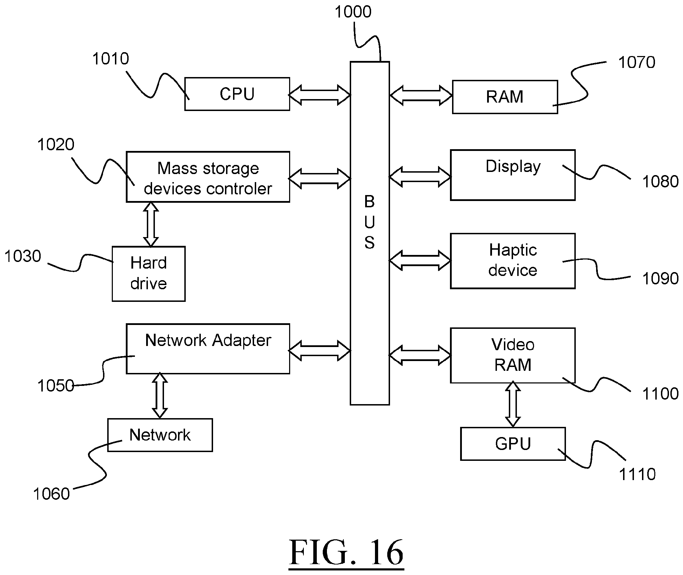

FIG. 16 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for mapping a texture on one or more points in a 3D scene, the one or more points in the 3D scene being obtained from a user-input with an input device, the method comprising:
- determining (S10), from the user-input performed with the input device, the one or more points in the 3D scene to be textured;
- computing (S20) a 3D support (202, 331, 341, 342, 531) comprising the determined one or more points to be textured;
- computing (S40) a texture (201, 321, 322, 323, 332, 340, 350) based on the determined one or more points; and
- rendering (S50) the computed texture on the computed 3D support (203).

2. The method of claim 1, the method further comprising:
- parametrizing (S30) the one or more points to be textured;
and wherein:
- computing (S40) the texture comprises computing the texture based on the parametrized one or more points (320).

3. The method of claim 1 or 2, wherein the 3D scene comprises a 3D modeled object (330), the computing (S20) of the 3D support comprising:
- placing each of the one or more points on the 3D modeled object (330); and
- determining a part of the 3D modeled object (330) serving as the 3D support (331).

4. The method of claim 3, wherein the placing of each of the one or more points on the 3D modeled object (330) comprises projecting each of the one or more points on the surface of the 3D modeled object (330).

5. The method of claim 3 or 4, wherein the determined part of the 3D modeled object (330) is a single surface that includes each of the one or more points placed on the 3D modeled object (330).

6. The method of any one of claim 5, wherein the 3D modeled object (330) is tessellated with polygons, and wherein the determining of the part of the 3D modeled object (330) serving as the 3D support (331) comprises:
- identifying the polygons of the 3D modeled object (330) that comprise the placed points;
- aggregating the identified polygons thereby obtaining the single surface; and
- computing a copy of the single surface, the copy of the single surface serving as the 3D support (331).

7. The method of claim 5, further comprising:
- computing a new tessellation (342, 351) of the single surface.

8. The method of claim 7, wherein the computing of the new tessellation comprises computing the new tessellation of the single surface with a density of tessellation that is substantially the same as a density of tessellation of the 3D modeled object (330) or a density of tessellation of the part of the 3D modeled object (330).

9. The method of claim 1, wherein the one or more points are coplanar, the computing (S20) of the 3D support (341) comprising determining a rectangular surface comprising each of the one or more points, the determined rectangular surface consisting in two triangles.

10. The method of any one of claims 1 to 9, the method further comprising:
- displaying (S60) the rendered texture on the 3D support.

11. The method of any one of claims 1 to 10, the method further comprising:
- detecting (S70) that the user-input is extended;
- determining one or more new points from the extended user-input;
- recomputing (S72) the 3D support so that the recomputed 3D support comprises the one or more new points;
- recomputing (S73) the texture so that the recomputed texture comprises the textured one or more new points; and
- updating (S74) the rendering of the recomputed texture on the recomputed 3D support.

12. The method of claim 11, the method further comprising:
- displaying the rendering of the recomputed texture on the recomputed 3D support.

13. A computer program comprising instructions which, when executed by a computer, cause the computer to perform the method of any one of claims 1 to 12.

14. A computer readable storage medium having recorded thereon a computer program of claim 13.

15. A system comprising a processor coupled to a memory, the memory having recorded thereon the computer program of claim 13.
